# EUROPÄISCHE PATENTANMELDUNG

(11) **EP 4 734 071 A1**
(43) Veröffentlichungstag der Anmeldung: **29.04.2026**
(21) Anmeldenummer: 25208864.6
(22) Anmeldetag: 15.10.2025
(51) Int. Cl.: G06V 10/143, G06V 40/16, G06V 40/60

(54) **VERFAHREN UND VORRICHTUNG ZUM ERFASSEN BIOMETRISCHER MERKMALE MIT AUTOMATISCHER HÖHENEINSTELLUNG**

(30) Priorität: 23.10.2024 DE 102024003544
(71) Anmelder: Bundesdruckerei GmbH, 10969 Berlin (DE)
(72) Erfinder: Szegvari, Piotr, 14469 Potsdam (DE)

(57) **Zusammenfassung**

Die Erfindung betrifft ein Verfahren zum automatisierten Betreiben einer Vorrichtung (101) zum Erfassen von biometrischen Merkmalen einer Person. Für ein automatisiertes, effizientes und zuverlässiges Bestimmen der biometrischen Daten wird eine Vorrichtung (101) mit einer ersten Bildaufnahmeeinrichtung (1) zum Aufnehmen von Wärmebilddaten einer Person (102) sowie einer zweiten Bildaufnahmeeinrichtung (2) zur Erfassung biometrischer Merkmale der Person (102) bereitgestellt, wobei wenigstens die Position der zweiten Bildaufnahmeeinrichtung (2) zum Einstellen einer Aufnahmeposition mittels einer Stelleinrichtung (108) einstellbar ist. Mittels der ersten Bildaufnahmeeinrichtung (1) werden Wärmebilddaten einer in einem Aufnahmebereich (104) der Vorrichtung (101) befindlichen Person (102) empfangen und die Position der Person (102) im Aufnahmebereich, insbesondere die Kopf- und/oder Gesichtsposition der Person, mittels der empfangenen Wärmebilddaten bestimmt. Anschließend wird für die Erfassung biometrischer Merkmale der Person (102) eine geeignete Aufnahmeposition oder einer an die geeignete Aufnahmeposition angenäherten Position der zweiten Bildaufnahmeeinrichtung (2) bestimmt, in welcher das biometrische Bild der Person (102) mittels der zweiten Bildaufnahmeeinrichtung (2) aufnehmbar ist. Sodann erfolgt ein Verlagern der zweiten Bildaufnahmeeinrichtung (2) mittels der Stelleinrichtung (108) in die Aufnahmeposition und/oder die angenäherte Position.

## Beschreibung

Die vorliegende Erfindung betrifft ein Verfahren zum automatisierten Betreiben einer Vorrichtung zum Erfassen von biometrischen Merkmalen einer Person sowie eine entsprechende Vorrichtung.

Es ist bekannt, Personen anhand von biometrischen Merkmalen zu identifizieren. Solche biometrischen Merkmale können auf Sicherheitsdokumenten, wie beispielsweise Ausweisen oder Pässen Verwendung finden. Mittels des biometrischen Passbildes ist das Sicherheitsdokument personalisiert und ermöglicht ein Identifizieren der Person, wahlweise in Verbindung mit weiteren Sicherheitselementen des Sicherheitsdokuments.

Durch Authentifizierungsverfahren, z.B. durch ein Verfahren zur Überprüfung der Identität einer Person, kann verhindert werden, dass unbefugte Personen auf sensible Informationen oder Dienste zugreifen. Beispielsweise können auf der Grundlage des Authentifizierungsergebnisses eines Benutzers Zugangskontrollsignale erzeugt werden, um dem Benutzer den Zugang zu kontrollierten Diensten oder kontrollierten Bereichen zu ermöglichen oder zu verwehren.

Die Authentifizierung kann anhand eines Bildes des Benutzers erfolgen. Beispielsweise kann ein automatisches Grenzkontrollsystem oder ein automatisches Tor das Bild verwenden, um die Identität des Benutzers zu überprüfen. Nachdem die Identität des Benutzers überprüft wurde, öffnet sich eine physische Schranke, z. B. ein Tor, um den Durchgang zu ermöglichen.

In der ISO 39794-5 sind eine Reihe von Anforderungen an die zu erfassenden Porträts definiert. Daraus ergibt sich zum Beispiel, dass für gute Ergebnisse biometrischer Vergleichsalgorithmen für Gesicht und Iris die entsprechenden Kameraaufnahmen so frontal wie möglich erfolgen sollen. Zudem wird ein Mindestabstand zwischen Gesicht und Sensor (Kamera) von mindestens einem Meter gefordert.

Mit Hilfe von Vorrichtungen der genannten Art können ein oder mehrere verschiedene biometrische Merkmale erfasst werden. Biometrische Portraits können mit Hilfe einer Bildaufnahmeeinrichtung aufgenommen werden. Vorrichtungen zum Erfassen der biometrischen Identifizierungsmerkmale sind hierzu mit einer Bildaufnahmeeinrichtung ausgestattet.

Vorrichtungen zum Erfassen von biometrischen Merkmalen können beispielsweise in Meldeämtern dazu eingesetzt werden, um unter Verwendung der erfassten biometrischen Merkmale ein Sicherheitsdokument wie eine Identitätskarte oder einen Reisepass zu erstellen. Die biometrischen Merkmale können zum Beispiel als maschinenlesbare Daten in einem elektronischen Speicher des Sicherheitsdokuments und / oder als aufgedrucktes Bild aufgebracht bzw. gespeichert werden.

Das Dokument US 2012/0293642 A1 offenbart eine als Kiosk-Terminal ausgestaltete Vorrichtung zum Erfassen biometrischer Identifizierungsmerkmale von Personen. In einer Ausgestaltung ist an einer Trägereinrichtung der Vorrichtung eine Kameraeinrichtung zum Erfassen eines biometrischen Portraits vorgesehen. Die Kameraeinrichtung ist an einem verstellbaren Träger der Trägereinrichtung befestigt. Eine Höheneinstellung der Vorrichtung für die jeweils zu erfassende Person kann automatisch erfolgen, indem die Kamera auf die Augenhöhe der zu erfassenden Person angepasst wird.

Die zum Zeitpunkt dieser Anmeldung noch nicht veröffentlichte deutsche Patentanmeldung DE102024102319.8 offenbart eine ebenfalls als Kiosk-Terminal ausgestaltete Vorrichtung mit einer Höheneinstellung der Kameraeinrichtung, bei der die Höheneinstellung über einen Näherungssensor ausgelöst wird. Die Höheneinstellung erfolgt mittels der Aufnahme von Bildern einer Person und der anschließenden qualitativen Überprüfung dieser Bilder.

Nachteilig an bekannten Lösungen für das automatisierte Betreiben von Vorrichtungen zum Erfassen biometrischer Merkmale von Personen ist der für die Anpassung der Vorrichtung an jeweilige Bedienpersonen verbundene Aufwand.

Aufgabe der vorliegenden Erfindung ist es, ein Verfahren und eine Vorrichtung zum automatisierten Bestimmen biometrischer Daten bereitzustellen, mit denen insbesondere das Erzeugen von biometrischen Bilddaten effizient und mit geminderter Fehleranfälligkeit ausgeführt werden kann.

Die Aufgabe wird durch die Merkmale der unabhängigen Patentansprüche gelöst. Weitere vorteilhafte Ausführungsformen sind Gegenstand der Beschreibung, der Figuren sowie der abhängigen Patentansprüche.

Gemäß einem ersten Aspekt der Erfindung weist das erfindungsgemäße Verfahren zum automatisierten Betreiben einer Vorrichtung zum Erfassen von biometrischen Merkmalen einer Person, folgende Schritte auf:
Es wird eine Vorrichtung zum Erfassen von biometrischen Merkmalen einer Person bereitgestellt, mit einer ersten Bildaufnahmeeinrichtung zum Aufnehmen von Wärmebilddaten einer Person sowie einer zweiten Bildaufnahmeeinrichtung zur Erfassung biometrischer Merkmale der Person, wobei wenigstens die Position der zweiten Bildaufnahmeeinrichtung zum Einstellen einer Aufnahmeposition mittels einer Stelleinrichtung einstellbar ist.

Es werden mittels der zweiten Bildaufnahmeeinrichtung Wärmebilddaten einer in einem Aufnahmebereich der Vorrichtung befindlichen Person empfangen. Die Wärmebilddaten können zur weiteren Verarbeitung an eine Auswerteeinrichtung und/oder eine Steuereinrichtung gesendet werden.

Nun kann gemäß einer bevorzugten Variante der Erfindung mittels der empfangenen Wärmebilddaten eine Erkennung einer Person im Aufnahmebereich erfolgen.

Es folgt eine Bestimmung der Position der Person im Aufnahmebereich, insbesondere der Kopfposition und/oder der Gesichtsposition der Person mittels der empfangenen Wärmebilddaten. Mit der ermittelten Position der Person im Aufnahmebereich wird eine für die Erfassung biometrischer Merkmale der Person geeignete Aufnahmeposition der zweiten Bildaufnahmeeinrichtung oder eine an die geeignete Aufnahmeposition angenäherte Position der zweiten Bildaufnahmeeinrichtung bestimmt.

Mittels der Stelleinrichtung wird die zweite Bildaufnahmeeinrichtung in die zuvor bestimmte, geeignete Aufnahmeposition oder die angenäherte Position verlagert.

Vorliegend wird unter einer Bildaufnahmeeinrichtung eine zur Aufnahme von Bildern geeignete Einrichtung verstanden. Die erste Bildaufnahmeeinrichtung kann einen Wärmebildsensor für den Empfang digitaler Wärmebilddaten aufweisen, die zweite Bildaufnahmeeinrichtung einen digitalen Bildsensor für den Empfang digitaler Bilddaten, insbesondere Farbbilddaten.

Die erste und/oder die zweite Bildaufnahmeeinrichtung kann vorzugsweise in eine Kameraeinrichtung aufgenommen sein. Die Kameraeinrichtung kann des Weiteren vorzugsweise ein Objektiv aufweisen.

Es kann vorzugsweise eine Kameraeinrichtung vorgesehen sein, welche die erste und die zweite Bildaufnahmeeinrichtung umfasst. Der Bildsensor der ersten und der zweiten Bildaufnahmeeinrichtung können gemeinsam auf der Bildebene eines Objektivs der Kameraeinrichtung angeordnet sein.

Das erfindungsgemäße Verfahren ermöglicht, dass auf weitere Sensoren zur Detektion von Personen, wie z.B. einen Näherungssensor zur Detektion einer Annäherung der Person an die Vorrichtung, verzichtet werden kann. Vorzugsweise erfolgt die Detektion der Person zumindest zunächst allein mittels der von der ersten Bildaufnahmeeinrichtung empfangenen Wärmebilddaten.

In bevorzugten Ausführungsformen sind die mittels der ersten Bildaufnahmeeinrichtung empfangenen Wärmebilddaten gegenüber den mittels der zweiten Bildaufnahmeeinrichtung empfangenen oder empfangbaren Bilddaten reduziert. Indem zumindest zunächst insbesondere gering auflösende Wärmebilddaten für die Bestimmung der Position einer im Aufnahmebereich befindlichen Person verwendet werden, kann die Bestimmung auch bei geringer Rechenleistung einer Auswerte- und/oder Steuereinrichtung, in welcher die Bestimmung erfolgt, zügig, idealerweise ohne durch die bedienende Person wahrnehmbare Verzögerungen, und trotzdem zuverlässig erfolgen. Tritt beispielsweise eine Familie gemeinsam vor eine erfindungsgemäße Vorrichtung, während nur die primär vor dem Gerät befindliche Position die Vorrichtung bedienen möchte, ist eine zuverlässige und zügige Reaktion der Vorrichtung von besonderer Bedeutung. Eine Familie verhält sich häufig sehr unruhig und die Bedienperson wird sich evtl. häufiger umdrehen und mit den Familienmitgliedern reden, während die Vorrichtung versucht, zumindest die grobe Höhe der Person zu finden und die zweite Bildaufnahmeeinrichtung auf diese Höhe einzustellen. Mit einer herkömmlichen Gesichtsbilderkennung mittels hochauflösender Bilder bzw. mittels eines hochauflösenden Videostreams, die oder der beispielsweise mittels der zweiten Bildaufnahmeeinrichtung empfangen werden könnte, wären deutlich mehr Daten durch die Steuer- bzw. Auswerteeinrichtung der Vorrichtung zu verarbeiten. Dies würde zu Verzögerungen bei der Einstellung Höhe der zweiten Bildaufnahmeeinrichtung nach einer Bewegung der Person führen, die Vorrichtung beim Nachregeln der Höheneinstellung häufiger hoch- und herunterfahren, ggf. mit einer Verzögerung.

In einer bevorzugten Weiterbildung der Erfindung wird der Kopf bevorzugt als primäre Wärmequelle im Ganzen erkannt, unabhängig von der Blickrichtung der Person im Aufnahmebereich. Das Zentrum dieser Wärmequelle kann vorzugsweise nahezu ohne Verzögerung bestimmt werden, und es kommt durch die einfache Anwendung einer Regelung mit auch mit kleiner Hysterese zu keinem zeitlich verzögerten Hoch- und Herunterstellen der zweiten Bildaufnahmeeinrichtung. Insbesondere kann eine grobe Position der Person zunächst bestimmt werden, um anschließend, bevorzugt nach einer festgelegten Sättigungsphase, in eine feine Höheneinstellung unter Verwendung einer Gesichtsbilderkennung mittels der zweiten Bildaufnahmeeinrichtung überzugehen.

Die zu erfassenden biometrischen Merkmale können insbesondere biometrische Identifizierungsmerkmale (ID-Merkmale) sein, die sich für die Verwendung in Sicherheitsdokumenten und/oder Authentifizierungssystemen eignen. Vorzugsweise werden biometrische Bilder gemäß dem Standard der ICAO (International Civil Aviation Organization) für Passbilder für maschinenlesbare Sicherheitsdokumente erfasst.

Der Aufnahmebereich ist vorzugsweise ein durch die erste Bildaufnahmeeinrichtung und/oder die zweite Bildaufnahmeeinrichtung erfassbarer Bereich. Der Aufnahmebereich kann durch eine vorbestimmte Fläche, insbesondere Standfläche, vor der Vorrichtung begrenzt sein, auf der sich die Person bei der Erfassung der biometrischen Merkmale aufhalten kann. Idealerweise ist die vorbestimmte Fläche vor der Vorrichtung markiert. Der Aufnahmebereich kann des Weiteren als ein Raum vor der Vorrichtung definiert sein.

Die Bestimmung der Position der Person umfasst in einer bevorzugten Variante der Erfindung die Bestimmung der Position des Kopfes in vertikaler Richtung. Insbesondere kann die Höhe der Kopfposition bestimmt werden. Des Weiteren kann die Position weiterer Körperteile mittels Bestimmung der Höhe des Kopfes und mittels auf die Kopfhöhe bezogener, in einer Steuer- und/oder Auswerteeinrichtung gespeicherter Referenzproportionen bestimmt werden.

Die Höhe kann mit Bezug auf eine Bezugsebene definiert sein. Die Bezugsebene kann durch eine Standfläche gebildet sein, auf der die Person insbesondere stehend oder sitzend angeordnet ist, wobei eine sitzende Position der Person beispielsweise durch Sitzen auf einem Stuhl oder in einem Rollstuhl eingenommen werden kann. Auf der Standfläche kann auch die Vorrichtung zum Erfassen von biometrischen Identifizierungsmerkmalen stehen.

In weiteren Ausführungsformen der Erfindung kann die Bestimmung der Position der Person die Bestimmung des Abstandes der Person von der Vorrichtung umfassen. Bevorzugt wird der Abstand mittels der Wärmebilddaten bestimmt, beispielsweise durch eine Bestimmung der Querschnittsfläche des Wärmebildes des Kopfes der erfassten Person und/oder die Bestimmung eines Verhältnisses der Querschnittsfläche zur Höhe und/oder Breite des Wärmebildes der erfassten Person. Vorzugsweise kann die Größe des Kopfes bestimmt werden, wobei mit üblichen Proportionsregeln von der Größe des Kopfes die Größe des Körpers oder die Größe der Person bestimmt werden kann.

Erfindungsgemäß kann mittels der zweiten Bildaufnahmeeinrichtung ein Erfassen der biometrischen Merkmale der Person erfolgen. Die biometrischen Merkmale werden insbesondere nach dem Verlagern der zweiten Bildaufnahmeeinrichtung erfasst.

Die geeignete Aufnahmeposition der zweiten Bildaufnahmeeinrichtung, in welcher das biometrische Bild der Person mittels der zweiten Bildaufnahmeeinrichtung aufnehmbar ist, kann vorzugsweise dem Standard der ICAO (International Civil Aviation Organization) für Passbilder für maschinenlesbare Sicherheitsdokumente genügen.

Die biometrischen Merkmale können vorzugsweise als biometrisches Lichtbild, weiter vorzugsweise als biometrisches Portrait, weiter vorzugsweise als biometrisches Gesichtsbild erfasst werden. Entsprechend kann eine zur Erfassung eines biometrischen Gesichtsbildes geeignete Aufnahmeposition der zweiten Bildaufnahmeeinrichtung, in welcher ein biometrisches Gesichtsbild der Person mittels der zweiten Bildaufnahmeeinrichtung aufnehmbar ist, bestimmt werden und mittels der zweiten Bildaufnahmeeinrichtung ein biometrisches Gesichtsbild der Person aufgenommen werden.

Die zweite Bildaufnahmeeinrichtung kann beim Verlagern in die Aufnahmeposition vorzugsweise derart verlagert werden, dass die Aufnahmeachse zum Aufnehmen des biometrischen Bildes im Wesentlichen auf Höhe der Augen der Person angeordnet wird.

In einer bevorzugten Ausgestaltung der Erfindung wird wenigstens die Höhe der zweiten Bildaufnahmeeinrichtung eingestellt. Für eine weiter verbesserte Anpassung der Vorrichtung an die Position einer im Aufnahmebereich befindlichen Person kann zusätzlich eine Einstellung der Neigung und/oder ein Rotieren und/oder ein Schwenken der zweiten Bildaufnahmeeinrichtung erfolgen.

Das Verlagern der zweiten Bildaufnahmeeinrichtung mittels der Stelleinrichtung in eine geeignete Aufnahmeposition kann bevorzugt derart erfolgen, dass zwischen der Bildaufnahmeeinrichtung und einer der Bildaufnahmeeinrichtung gegenüberliegend angeordneten Person eine insbesondere horizontale Aufnahmeachse ausgebildet wird, entlang welcher das digitale biometrische Bild für die Person mittels der Bildaufnahmeeinrichtung aufnehmbar ist. Um biometrische Gesichtsbilder zu erstellen, die den Kriterien der ICAO genügen, kann die Aufnahmeachse im Wesentlichen auf Höhe der Augen der Person, auf Höhe einer horizontalen Sichtachse der Person, oder auf Höhe der Frankfurter Horizontalen der Person angeordnet sein. Die Frankfurter Horizontale (auch "Deutsche Horizontale") ist eine gedachte Ebene mit Bezug zum menschlichen Schädel, die durch den tiefstgelegenen Punkt des Unterrandes der Augenhöhle und durch den höchsten Punkt des äußeren knöchernen Gehörgangs verläuft.

Gemäß einer weiteren Ausführungsform der Erfindung kann die Aufnahmeachse einer optischen Achse einer optischen Einrichtung der zweiten Bildaufnahmeeinrichtung entsprechen. Die optische Einrichtung kann ein optisches System mit wenigstens einer rotationssymmetrischen Linse aufweisen, wobei die optische Achse der Symmetrieachse der Linse entspricht.

Erste und/oder zweite Bildaufnahmeeinrichtung können gemäß weiteren Ausführungsformen ausgestaltet sein, statische und/oder bewegte Bilder über eine Schnittstelle zu übermitteln und/oder auf einem Speichermedium aufzuzeichnen. Gemäß einer bevorzugten Ausführungsform der Erfindung können erste und/oder zweite Bildaufnahmeeinrichtung mit einem elektronischen Bildsensor versehen sein. Vorzugsweise weisen erste und/oder zweite Bildaufnahmeeinrichtung außerdem ein wenigstens eine Linse umfassendes Objektiv auf, welche zu erfassende Bilder auf den jeweiligen elektronischen Sensor projiziert. Dabei ist die erste Bildaufnahmeeinrichtung vorzugsweise für den Empfang von Infrarotstrahlung, d.h. Strahlung mit einer Wellenlänge zwischen 780 nm und 1 mm, konfiguriert, die zweite Bildaufnahmeeinrichtung für den Empfang von Strahlung im wahrnehmbaren Bereich, d.h. Strahlung mit einer Wellenlänge von ca. 360 nm bis 830 nm.

In weiteren Ausführungsformen kann die erste Bildaufnahmeeinrichtung, insbesondere der Sensor der ersten Bildaufnahmeeinrichtung, eine Auflösung aufweisen, die deutlich geringer ist als die Auflösung der zweiten Bildaufnahmeeinrichtung, insbesondere die Auflösung des Sensors der zweiten Bildaufnahmeeinrichtung. Vorzugsweise kann die erste Bildaufnahmeeinrichtung eine Auflösung von weniger als 200 Zeilen, des Weiteren vorzugsweise von weniger als 130 Zeilen aufweisen, äußerst vorzugsweise nicht mehr als 120 Zeilen. Insbesondere kann die erste Bildaufnahmeeinrichtung eine Auflösung von weniger als 20.000 Pixeln aufweisen. Auf diese Weise ist der Umfang der für die Positionsbestimmung einer Person im Aufnahmebereich verwendeten Daten gegenüber einer Verwendung der Bilddaten der zweiten Bildaufnahmeeinrichtung reduziert, wodurch die Verarbeitung der empfangenen Bilddaten beschleunigt wird. Damit wird die zeitliche Verzögerung bei der Höheneinstellung verringert wird und weniger leistungsfähige und somit kostengünstigere und/oder energiesparende Prozessoren können Anwendung finden.

Des Weiteren können die von der ersten Bildaufnahmeeinrichtung empfangenen Bilddaten derart reduziert und/oder verändert sein, dass eine Identifizierung der Person im Aufnahmebereich nicht möglich ist.

In bevorzugten Ausführungsformen können Bilddaten von der ersten und/oder der zweiten Bildaufnahmeeinrichtung als eine Bildfolge, insbesondere als Videostream bereitgestellt.

In einer weiteren Variante des Verfahrens erfolgt insbesondere nach der Verlagerung der zweiten Bildaufnahmeeinrichtung ein Empfang von Bilddaten des Aufnahmebereichs mittels der zweiten Bildaufnahmeeinrichtung. Die zweite Bildaufnahmeeinrichtung ist vorzugsweise konfiguriert, Bilddaten für die Erstellung eines biometrischen Bildes zu empfangen. Dazu weisen die von der zweiten Bildaufnahmeeinrichtung empfangenen Bilddaten eine Auflösung auf, die idealerweise deutlich größer als die Auflösung der von der ersten Bildaufnahmeeinrichtung empfangenen Bilddaten ist. Mittels der zweiten Bildaufnahmeeinrichtung werden bevorzugt Bilddaten mit einer Auflösung von mehr als 800 Zeilen, insbesondere mit mehr als 800.000 Pixeln, vorzugsweise mit mehr als 3000 Zeilen und/oder mehr als 7.000.000 Pixeln empfangen.

Die mittels der zweiten Bildaufnahmeeinrichtung empfangenen Bilddaten können nun für eine Einstellung, insbesondere Feineinstellung der Position der zweiten Bildaufnahmeeinrichtung verwendet werden.

Zunächst erfolgt eine Bestimmung der Position der Person im Aufnahmebereich, insbesondere der Kopf- und/oder Gesichtsposition der Person mittels der empfangenen Lichtbilddaten. Anschließend wird eine für die Erfassung biometrischer Merkmale der Person geeigneten Aufnahmeposition der zweiten Bildaufnahmeeinrichtung bestimmt, in welcher das biometrische Bild der Person mittels der zweiten Bildaufnahmeeinrichtung verbessert aufnehmbar ist. Aufgrund der höheren Auflösung der zweiten Bildaufnahmeeinrichtung ist die geeignete Aufnahmeposition genauer bestimmbar. Somit kann mittels der zweiten Bildaufnahmeeinrichtung eine Feineinstellung der geeigneten Aufnahmeposition oder erst eine geeignete Aufnahmeposition bestimmt werden.

Die Bestimmung der Position der Person kann in bevorzugt einen oder mehrere der folgenden Schritte umfassen:
- Eine Erkennung von Wärmeinhomogenitäten: Eine zu erkennende Wärmeinhomogenität kann als eine deutliche Abweichung der Temperatur innerhalb des Aufnahmebereichs definiert sein, insbesondere als Abweichung von der gemessenen Raumtemperatur. Die Wärmeinhomogenität kann sich auf einen einzelnen Bildpixel oder auf mehrere Bildpixel erstrecken.
- Eine Bestimmung von Wärmeinhomogenitäten mit einer Temperatur in einem vorbestimmten Temperaturbereich, vorzugsweise in einem Temperaturbereich von 25 °C bis 37 °C, weiter vorzugsweise von 30 °C bis 36 °C, insbesondere von 32 °C bis 34 °C,
- Eine Bestimmung von Wärmeinhomogenitäten, die in einem Cluster angeordnet sind.
- Eine Bestimmung eines Clusters von Wärmeinhomogenitäten mit
   i. mit einer Erstreckung, die einer Referenzerstreckung entsprechen und/oder innerhalb eines Referenzerstreckungsbereichs liegen kann. Dabei entsprechen Referenzerstreckung und/oder Referenzerstreckungsbereich vorzugsweise vorbestimmten Werten, die einem menschlichen Körper und/oder einem menschlichen Kopf entsprechen. Referenzerstreckung und/oder Referenzerstreckungsbereich können dazu in einer Speichereinrichtung der Vorrichtung gespeichert sein.
   ii. und/oder einer Kontur, die einer Referenzkontur entsprechen und/oder innerhalb eines vorstimmten Referenzkonturbereiches von einer Referenzkontur liegt. Dabei entsprechen Referenzkontur und/oder Referenzkonturbereich vorzugsweise vorbestimmten Werten, die einem menschlichen Körper und/oder einem menschlichen Kopf entsprechen. Referenzkontur und/oder Referenzkonturbereich können dazu in einer Speichereinrichtung der Vorrichtung gespeichert sein.
- Eine Bestimmung der Position von Wärmeinhomogenitäten im Aufnahmebereich. Wurde ein Cluster von Wärmeinhomogenitäten bestimmt, kann beispielsweise die Position des Flächenschwerpunkts ermittelt werden.

Alternativ oder zusätzlich kann ein Vision-Algorithmus angewendet werden, um eine zuverlässige Personenerkennung zu ermöglichen.

Mittels der ersten Bildaufnahmeeinrichtung kann während der Höheneinstellung eine Vielzahl von Wärmebildern empfangen werden. Insbesondere kann ein Videostream bzw. Bilddatenstrom empfangen werden, um die Höheneinstellung der zweiten Bildaufnahmeeinrichtung kontinuierlich zu prüfen und/oder Bewegungen einer Person vor der Vorrichtung bei der Höheneinstellung zu berücksichtigen.

Entsprechend kann ein Bewegungsmuster von wenigstens einer Wärmeinhomogenität, von einem Wärmecluster und/oder von einer detektierten Person bestimmt und mit einem oder mehreren Referenzbewegungsmustern verglichen werden, um die tatsächliche Position der Person zu bestimmen. Auf diese Weise kann z.B. ein Beugen des Kopfes der Person erkannt werden, um in diesem Fall ein Nachsteuern der Höheneinstellung zu vermeiden.

Wenn eine Person detektiert wird, startet gemäß einer bevorzugten Ausgestaltung als Reaktion hierauf eine Verlagerung der zweiten Bildaufnahmeeinrichtung mittels der Stelleinrichtung in die Aufnahmeposition. Auf diese Weise kann das Verfahren zum Erfassen des biometrischen Merkmals für eine Person automatisiert gestartet werden, wenn sich die Person der Vorrichtung nähert oder diese als der Vorrichtung gegenüberliegend stehend oder sitzend detektiert wird.

Die Erfassung biometrischer Merkmale mittels der zweiten Bildaufnahmeeinrichtung kann gemäß bevorzugten Ausführungen der Erfindung über ein Bild erfolgen, das insbesondere Anforderungen an ein biometrisches Passbild für ein Sicherheitsdokument erfüllen kann. Das Bild kann eine visuelle Darstellung der Person liefern, das durch Aufnahme des Gesichts der Person erhalten wird. Alternativ kann das erzeugte Bild der Person auch zur Speicherung in einem Speicher eines Sicherheitsdokumentes als digitales Bild konfiguriert sein. Bei dem Sicherheitsdokument kann es sich zum Beispiel um einen Personalausweis, ein Visum, einen Führerschein, einen Fahrzeugschein, eine Gesundheitskarte, einen Firmenausweis, eine Bankkarte oder ein anderes Ausweisdokument handeln, das ein identitätsbezogenes Feld mit einem Foto des Benutzers enthält. In einem anderen Beispiel kann ein Identitätstoken in Form einer ID-Anwendung bereitgestellt werden, die auf einem mobilen, tragbaren Endgerät des Benutzers installiert ist. In diesem Fall kann das Bild des Benutzers z. B. auf einem Display des mobilen Endgeräts des Benutzers angezeigt werden.

Gemäß einer weiteren Ausführungsform der Erfindung kann die Vorrichtung mit einer Bedieneinrichtung bereitgestellt sein. Die Bedieneinrichtung kann ein Bedienpanel aufweisen, z.B. mit einer Tastatur und/oder einem Touchscreen. Dabei können die zweite Bildaufnahmeeinrichtung zum Einstellen einer Aufnahmeposition für das Aufnehmen biometrischer Merkmale und die Bedieneinrichtung zum Einstellen einer Bedienposition mittels einer Stelleinrichtung zumindest hinsichtlich einer Höhe, z.B. in Bezug auf die Bezugsebene, unabhängig voneinander einstellbar sein, um eine ergonomische Bedienung durch die zu erfassende Person zu ermöglichen.

Die Bedieneinrichtung kann insbesondere eine Fingerabdruckeinrichtung zum Erfassen eines digitalen Fingerabdrucks aufweisen. Die Fingerabdruckeinrichtung kann in die Bedieneinrichtung integriert und gemeinsam mit dieser verlagerbar sein.

Die Höhe der Bedieneinrichtung kann in einer bevorzugten Ausgestaltung der Erfindung anhand der folgenden Verfahrensschritte eingestellt werden:
- Die einzustellende Höhe der zweiten Bildaufnahmeeinrichtung für eine geeignete Aufnahmeposition oder die eingestellte Höhe der zweiten Bildaufnahmeeinrichtung wird bestimmt.
- Es werden Zuordnungsdaten, welche für eine Vielzahl von Personen unterschiedlicher Größe eine jeweilige größenangepasste Zuordnung zwischen einer Referenzhöhe der Bildaufnahmeeinrichtung und einer zugeordneten Referenzposition der Bedieneinrichtung anzeigen, bereitgestellt.
- Eine der eingestellten oder einzustellenden Höhe der zweiten Bildaufnahmeeinrichtung entsprechende Referenzhöhe und eine dieser zugeordneten Referenzposition der Bedieneinrichtung wird aus den Zuordnungsdaten bestimmt.
- Die Bedieneinrichtung wird in die zugeordnete Referenzposition mittels einer Stelleinrichtung verlagert.

Anschließend kann das Erfassen eines digitalen biometrischen Bildes der Person mittels der zweiten Bildaufnahmeeinrichtung und / oder weiterer Daten oder Informationen, insbesondere eines digitalen Fingerabdrucks der Person mittels einer Fingerabdruckeinrichtung erfolgen.

Mit dieser bevorzugten Ausgestaltung des Verfahrens und der Vorrichtung ist es somit möglich, für das Erfassen eines oder mehrerer verschiedener biometrischer Merkmale einer Person die Vorrichtung automatisiert an Personen unterschiedlicher Größe anzupassen, so dass die biometrischen Merkmale mittels der zweiten Bildaufnahmeeinrichtung und/oder der Fingerabdruckeinrichtung sicher und effizient sowie ergonomisch für die jeweilige Person erfasst werden können. Die Vorrichtung wird automatisiert an die Körperproportionen der Person angepasst, für die aktuell die biometrischen Identifizierungsmerkmale erfasst werden sollen, insbesondere hinsichtlich des Höhenabstands zwischen Gesicht und horizontal angewinkeltem Unterarm.

Die Höhe der zweiten Bildaufnahmeeinrichtung kann als der Höhenabstand einer horizontalen Aufnahmeachse über der Bezugsebene bestimmt werden, wenn die zweite Bildaufnahmeeinrichtung in der Aufnahmeposition angeordnet ist. Die Aufnahmeachse kann insbesondere einer optischen Achse einer optischen Einrichtung der zweiten Bildaufnahmeeinrichtung entsprechen. Bei dieser oder anderen Ausführungsformen kann die zweite Bildaufnahmeeinrichtung in der Aufnahmeposition derart angeordnet werden, dass die Aufnahmeachse zwischen der optischen Einrichtung der zweiten Bildaufnahmeeinrichtung und dem Augenpaar der Person im Wesentlichen horizontal verläuft. Die Höhe der zweiten Bildaufnahmeeinrichtung, insbesondere der optischen Einrichtung über der Bezugsebene, entspricht hierbei dem Abstand zwischen Bezugsebene und zweiter Bildaufnahmeeinrichtung in vertikaler Richtung.

Mittels der Zuordnungsdaten kann der eingestellten bzw. der jeweiligen Referenzhöhe der zweiten Bildaufnahmeeinrichtung als Referenzposition zumindest eine Referenzhöhe der Bedieneinrichtung über der Bezugsebene zugeordnet werden. So ist auch die Referenzhöhe für die Bedieneinrichtung hinsichtlich der Bezugsebene definiert. Alternativ oder ergänzend können die Zuordnungsdaten Informationen enthalten, welche einen Abstand zwischen zweiter Bildaufnahmeeinrichtung und Bedieneinrichtung in vertikaler Richtung für die Personen unterschiedlicher Größe jeweils anzeigen. In den Zuordnungsdaten können die Daten in Tabellenform einander zugeordnet sein.

Der Bedieneinrichtung kann eine Bedienauflage der Vorrichtung zum Erfassen von biometrischen Identifizierungsmerkmalen zugeordnet werden, mit welcher der Person, zum Beispiel zum Erfassen des digitalen Fingerabdrucks, eine insbesondere horizontale Auflagefläche für eine Unterarm- und Handauflage bereitgestellt wird. Hierbei ist zumindest eine Referenzhöhe der Bedieneinrichtung über der Bezugsebene eingerichtet, die der Person für das Bedienen und/oder das Erfassen des digitalen Fingerabdrucks auf der Auflagefläche eine ergonomisch bequeme Unterarm- und/oder Handauflage ermöglicht. Bevorzugt kann bei Benutzung der Unterarm- und/oder Handauflage der Unterarm der Person im Wesentlichen in horizontaler Richtung verlaufend positioniert sein. Dieses ermöglicht der Person eine bequeme und sichere Auflage des Unterarms sowie der Hand beim Bedienen der Bedieneinrichtung und/oder der Fingerabdruckeinrichtung zum Erfassen des digitalen Fingerabdrucks.

Die Vorrichtung zum Erfassen von biometrischen Merkmalen einer Person kann mit einer Eingabeeinrichtung bereitgestellt werden, welche auf der horizontalen Auflagefläche und / oder benachbart hierzu angeordnet und eingerichtet ist, eine Benutzereingabe der Person zu Erfassen. Die Eingabeeinrichtung kann beispielsweise eine Tastatur und / oder ein berührungssensitives Eingabefeld aufweisen, die es der Person ermöglichen, Benutzereingaben zu machen. Hierbei kann vorgesehen sein, dass die Eingabeeinrichtung konfiguriert ist, eine Unterschrift der Person zu erfassen, beispielsweise mittels eines elektronischen (berührungssensitiven) Unterschriftsfeldes, welches die Person mittels Finger und / oder einem Eingabestift bedienen kann.

Die Zuordnungsdaten können Folgendes aufweisen: erste Zuordnungsdaten, welche Personen unterschiedlicher Größe in stehender Position eine jeweilige größenangepasste Zuordnung zwischen Referenzhöhe der zweiten Bildaufnahmeeinrichtung und zugeordneten Referenzposition der Bedieneinrichtung bezüglich der Bezugsebene anzeigen; und zweite Zuordnungsdaten, welche von den ersten Zuordnungsdaten verschieden sind und Personen unterschiedlicher Größe in sitzender Position eine jeweilige größenangepasste Zuordnung zwischen Referenzhöhe der zweiten Bildaufnahmeeinrichtung und zugeordneten Referenzposition der Bedieneinrichtung bezüglich der Bezugsebene anzeigen.

Diese Ausgestaltung ermöglicht für den automatisierten Betrieb der Vorrichtung eine Unterscheidung zwischen stehenden und sitzenden Personen, wobei Letzteres insbesondere auch das Erfassen von Personen im Rollstuhl unterstützt. Beim Betrieb der Vorrichtung zum Erfassen der biometrischen Identifizierungsmerkmale kann in diesem Zusammenhang vorgesehen sein, eine Benutzereingabe zu erfassen, welche anzeigt, ob die Person im Aufnahmebereich der Vorrichtung steht oder sitzt. Als Reaktion hierauf kann die Verlagerung der zweiten Bildaufnahmeeinrichtung in die Aufnahmeposition ausgeführt werden, um anschließend auf Grundlage der eingestellten Höhe bzw. der Referenzhöhe der zweiten Bildaufnahmeeinrichtung die zugeordnete Referenzposition der Bedieneinrichtung innerhalb der vorausgewählten Zuordnungsdaten zu bestimmen. Dazu kann in den ersten und den zweiten Zuordnungsdaten nach der der aktuellen Höhe der zweiten Bildaufnahmeeinrichtung entsprechenden Referenzhöhe gesucht werden, um so die zugeordnete Referenzposition der Bedieneinrichtung zu bestimmen.

In einer weiteren alternativen Ausführung der Erfindung kann vorgesehen sein, die Zuordnungsdaten, welche für die Personen die Zuordnungspaare zwischen Referenzhöhe der zweiten Bildaufnahmeeinrichtung und zugeordneter Referenzposition der Bedieneinrichtung umfassen, anhand der an sich bekannten Proportionsregeln für den menschlichen Körper zu bestimmen. Hierbei wird angenommen, dass ein Mensch in etwa die Höhe eines Vielfachen von Kopfhöhen aufweist, insbesondere 7 bis 7,5 Kopfhöhen und/oder bis zu 8 Kopfhöhen. Die Kopfhöhe kann als Maßeinheit für die Bestimmung weiterer Proportionen des menschlichen Körpers dienen. Z.B. kann sich die Maßeinheit Kopf über die Länge des Körpers hierbei wie folgt ("Achtelprinzip") verteilen: Kopf; von Kinn bis zu den Brustwarzen; von den Brustwarzen bis zum Nabel; vom Nabel bis zum Schritt; vom Schritt bis zur Mitte der Oberschenkel; von der Mitte der Oberschenkel bis knapp unter die Knie; von den Knien bis zur Mitte der Unterschenkel; und von der Mitte der Unterschenkel bis zu den Fußsohlen.

Mit den mittels der ersten Bildaufnahmeeinrichtung erfassten Wärmebilddaten kann die Kopfhöhe der Person bestimmt werden. Von dieser können anschließend die zu erwartenden Proportionen des Körpers der Person abgeleitet werden.

Die im Zusammenhang mit dem Verfahren zum automatisierten Betreiben einer Vorrichtung zum Erfassen von biometrischen Merkmalen (ID-Merkmale) einer Person erläuterten Merkmale können in Verbindung mit der Vorrichtung entsprechend vorgesehen sein.

Eine erfindungsgemäße Vorrichtung zum Erfassen von biometrischen Merkmalen einer Person weist eine erste Bildaufnahmeeinrichtung zum Aufnehmen von Wärmebilddaten einer Person sowie eine zweite Bildaufnahmeeinrichtung zur Erfassung biometrischer Merkmale der Person auf, wobei wenigstens die Position der zweiten Bildaufnahmeeinrichtung zum Einstellen einer Aufnahmeposition mittels einer Stelleinrichtung einstellbar ist. Die zweite Bildaufnahmeeinrichtung ist zum Einstellen der Aufnahmeposition insbesondere in ihrer Höhe oberhalb einer Bezugsebene einstellbar. Die Vorrichtung ist erfindungsgemäß eingerichtet,
Wärmebilddaten von einer in einem Aufnahmebereich der Vorrichtung befindlichen Person zu empfangen und die Position der Person im Aufnahmebereich, insbesondere der Kopf- und/oder Gesichtsposition der Person, mittels der empfangenen Wärmebilddaten zu bestimmen.

Des Weiteren ist die Vorrichtung erfindungsgemäß eingerichtet, eine für die Erfassung biometrischer Merkmale der Person geeigneten Aufnahmeposition der zweiten Bildaufnahmeeinrichtung oder einer an die geeignete Aufnahmeposition angenäherten Position der zweiten Bildaufnahmeeinrichtung zu bestimmen, in welcher die biometrischen Merkmale der Person mittels der zweiten Bildaufnahmeeinrichtung aufnehmbar sind. Zudem ist die Vorrichtung ausgestaltet, die zweite Bildaufnahmeeinrichtung mittels der Stelleinrichtung in die geeignete Aufnahmeposition und/oder die angenäherte Position zu verlagern.

Für die Auswertung der Wärmebilddaten der ersten Bildaufnahmeeinrichtung und/oder von Bilddaten der zweiten Bildaufnahmeeinrichtung, z.B. zur Bestimmung der Position einer im Aufnahmebereich befindlichen Person, kann die Vorrichtung eine Steuereinrichtung und/oder eine Auswerteeinrichtung aufweisen. Die Steuereinrichtung und/oder Auswerteeinrichtung kann einen Prozessor zur Ausführung von Befehlen sowie eine Speichereinrichtung zur Speicherung von empfangenen und erstellten Daten umfassen.

Die Vorrichtung kann eine Bedieneinrichtung aufweisen, die vorzugsweise in ihrer Höhe unabhängig von der zweiten Bildaufnahmeeinrichtung verstellbar sein kann.

Die Vorrichtung zum Erfassen von biometrischen Merkmalen der Person kann in einer weiteren bevorzugten Ausgestaltung einen Träger aufweisen, an welchem die zweite Bildaufnahmeeinrichtung, die Bedieneinrichtung und die Stelleinrichtung angeordnet sind. Das unabhängige Verlagern von zweiter Bildaufnahmeeinrichtung und Bedieneinrichtung kann entlang einer gemeinsamen, insbesondere aufrechtstehenden Längsachse des Trägers erfolgen. Alternativ kann vorgesehen sein, zweite Bildaufnahmeeinrichtung und Fingerabdruckeinrichtung entlang beabstandeter, vorzugsweise aufrechtstehender Bewegungsachsen zu verlagern.

Die Vorrichtung zum Erfassen von biometrischen Merkmalen der Person kann als Kiosk-Terminal bereitgestellt werden. Das Kiosk-Terminal kann ein örtlich fixiertes Terminal oder ein örtlich verlagerbar ausgestaltetes (mobiles) Terminal sein.

Weitere Vorteile und Einzelheiten der Erfindung werden beispielhaft anhand der in den schematischen Figuren dargestellten Ausführungsbeispielen näher erläutert. Hierbei zeigt:
- Fig. 1: eine schematische Darstellung einer erfindungsgemäßen Vorrichtung zum Erfassen von biometrischen Merkmalen einer Person in einer Ausgangsstellung;
- Fig. 2: eine schematische Darstellung der erfindungsgemäßen Vorrichtung der Fig. 1 mit einer angepassten Position der zweiten Bildaufnahmeeinrichtung;
- Fig. 3: eine schematische Darstellung eines erfindungsgemäßen Verfahrens zum automatisierten Betreiben einer Vorrichtung;
- Fig. 4: eine schematische Darstellung zusätzlicher Schritte eines erfindungsgemäßen Verfahrens zum automatisierten Betreiben einer Vorrichtung.

Im Folgenden werden beispielhafte Ausführungsformen der Erfindung mit Bezugnahme auf die Figuren beschrieben, wobei gleiche Bezugszeichen sich auf gleiche Elemente beziehen. Es versteht sich, dass auch andere Ausführungsformen erstellt und Änderungen vorgenommen werden können, ohne von dem Konzept der vorliegenden Erfindung abzuweichen. Die folgende ausführliche Beschreibung ist deshalb nicht in einem beschränkenden Sinne zu verstehen. Ferner versteht es sich, dass die Merkmale der verschiedenen hierin beschriebenen Ausführungsbeispiele miteinander kombiniert werden können, sofern nicht etwas anderes angegeben ist.

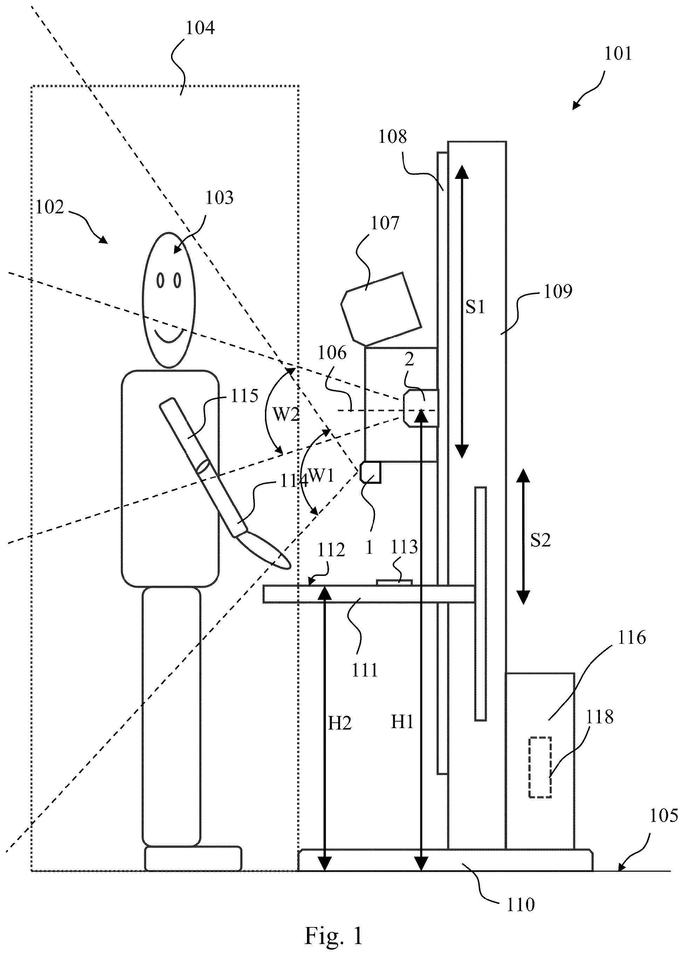

Fig. 1 zeigt eine schematische Darstellung einer Vorrichtung 101 zum Erfassen von biometrischen Merkmalen einer Person 102, die sich im gezeigten Beispiel vor der Vorrichtung 101 in stehender Position befindet. In der gezeigten Ausgestaltung ist die Vorrichtung 101 als ein Kiosk-Terminal ausgestaltet, welches auf einer Bezugsebene 105 ortsfest oder mobil angeordnet sein kann.

Die Vorrichtung weist eine erste Bildaufnahmeeinrichtung 1 auf, die zur Aufnahme eines Wärmebildes ausgestaltet ist, sowie eine zweite Bildaufnahmeeinrichtung 2, die zur Aufnahme biometrischer Porträts, insbesondere Passbilder ausgestaltet ist. Die erste Bildaufnahmeeinrichtung ist mit einer optischen Einrichtung versehen, die einen Bildwinkel W1 aufweist.

Die Person 102 hat ihr Gesicht 103 der Vorrichtung 101 zugewandt, und zwar der zweiten Bildaufnahmeeinrichtung 2, die eingerichtet ist, ein digitales biometrisches Porträt der Person 102 aufzunehmen. Die zweite Bildaufnahmeeinrichtung 2 weist eine optische Einrichtung mit einem Bildwinkel W2 auf, innerhalb dessen bei geeignetem Abstand und geeigneter Position der Person 102 ein biometrisches Porträt der Person 102 aufnehmbar ist.

Hierfür ist die zweite Bildaufnahmeeinrichtung 2 in einer Höhe H1 über einer Bezugsebene 5, auf der im gezeigten Beispiel die Person 102 sowie die Vorrichtung 101 stehen, so angeordnet, dass ausgehend von der zweiten Bildaufnahmeeinrichtung 2, insbesondere einer optischen Einrichtung der zweiten Bildaufnahmeeinrichtung 2, eine horizontale Sicht- oder Aufnahmeachse 106 ausgebildet ist, entlang welcher die zweite Bildaufnahmeeinrichtung 2 ein digitales biometrisches Porträt derart aufnehmen kann, dass aus den digitalen Daten für das Porträt biometrische Gesichtsmerkmale bestimmt werden können.

Bei der Verwendung der zweiten Bildaufnahmeeinrichtung 2 zum Aufnehmen von Porträts wird wahlweise eine Beleuchtungseinrichtung 107 genutzt, um die Person 102 auszuleuchten, insbesondere im Bereich des Gesichts 3. Bei dem dargestellten Ausführungsbeispiel ist die Beleuchtungseinrichtung 107 an der zweiten Bildaufnahmeeinrichtung 2 angeordnet, so dass die Beleuchtungseinrichtung 107 zusammen mit der zweiten Bildaufnahmeeinrichtung 2 höhenverstellbar an der Vorrichtung 101 angeordnet ist. Alternativ kann vorgesehen sein, dass die Beleuchtungseinrichtung 107 unabhängig von der zweiten Bildaufnahmeeinrichtung 2 verlagerbar ist. Auch eine ortsfeste Montage der Beleuchtungseinrichtung 107 an der Vorrichtung 101 kann vorgesehen sein.

Zum Einstellen der Höhe der zweiten Bildaufnahmeeinrichtung 2 über der Bezugsebene 105 weist die Vorrichtung 101 eine Stelleinrichtung 108 auf, die bei dem gezeigten Beispiel an einem Träger 9 gebildet ist. Am unteren Ende des Trägers 9 ist dieser für einen stabilen Stand der Vorrichtung 101 mit einem Vorrichtungsfuß 110 verbunden.

Mittels der Stelleinrichtung 108 ist weiterhin eine Bedieneinrichtung 111 höhenverstellbar hinsichtlich der Bezugsebene 5. Die Höheneinstellung der Bedieneinrichtung erfolgt unabhängig von der Höheneinststellung der zweiten Bildaufnahmeeinrichtung 2. Die Bedieneinrichtung 111 ist beispielhaft ebenfalls an dem Träger 109 höhenverstellbar aufgenommen und stellt eine horizontale Auflagefläche 112 bereit, auf der eine Fingerabdruck- oder Fingerabdrucksensoreinrichtung 13 angeordnet ist, mit der für die Person 102 ein digitaler Fingerabdruck erfasst werden kann.

Zu diesem Zweck ist die Bedieneinrichtung 111 mit Hilfe der Stelleinrichtung gemäß Fig. 1 in einer Höhe über der Bezugsebene 105 angeordnet, die es der Person 102 ermöglicht, eine ergonomische und bequeme Position zum Bedienen der Fingerabdruckeinrichtung 113 einzunehmen, bei der ein Unterarm 114 in im Wesentlichen horizontaler Lage auf der horizontalen Auflagefläche 112 angeordnet wird, was eine bequeme Bedienung der Fingerabdruckeinrichtung 113 mit den Fingern ermöglicht. Der Unterarm 114 ist hierbei gegenüber dem Oberarm 115 abgewinkelt.

Mittels der Stelleinrichtung 108 ist es möglich, die zweite Bildaufnahmeeinrichtung 2 sowie die Fingerabdruckeinrichtung 113 auf der Bedieneinrichtung 111 unabhängig und getrennt voneinander hinsichtlich der Höhe über der Bezugsebene 105 einzustellen, derart, dass das Aufnehmen des digitalen biometrischen Porträts wie auch das Erfassen des digitalen Fingerabdrucks mittels der Fingerabdruckeinrichtung 113 korrekt und für die Person 102 bequem erfolgen können. Die Höhenverstellbarkeit für zweite Bildaufnahmeeinrichtung 2 und der Fingerabdruckeinrichtung 113, die Teil der Bedieneinrichtung 111 ist, ist in Fig. 1 schematisch anhand von Pfeilen A und B dargestellt, wobei Bereiche der Höhenverstellbarkeit je nach Anwendungsfall konfigurierbar sind.

Zur Steuerung einzelner Betriebsfunktionen der Vorrichtung 101 ist eine Steuereinrichtung 116 vorgesehen. Beispielsweise kann mit der Steuereinrichtung 116 die Höhenverstellung von zweiter Bildaufnahmeeinrichtung 2 und Bedieneinrichtung 111 mit Fingerabdruckeinrichtung 113 mittels der Stelleinrichtung 108 gesteuert werden. Die Steuereinrichtung 116 kann eine Auswerteeinrichtung bilden, die der Auswertung empfangener Bilddaten dient. Die Steuereinrichtung 116 weist dazu einen hier nicht dargestellten Prozessor sowie eine Speichereinrichtung 118 auf.

Mit der Steuereinrichtung 116 können weitere Funktionen gesteuert werden, beispielsweise das Erfassen des digitalen biometrischen Portraits mittels der zweiten Bildaufnahmeeinrichtung 2, das Betätigen der Beleuchtungseinrichtung 107 und / oder das Erfassen des digitalen Fingerabdrucks mit der Fingerabdruckeinrichtung 13.

Bei der Vorrichtung 101 zum Erfassen von biometrischen Identifizierungsmerkmalen einer Person gemäß Fig. 1 bildet die erste Bildaufnahmeeinrichtung 1 eine Personensensor- oder Personendetektionseinrichtung, die wie ein kontaktloser Näherungssensor eingerichtet ist, die Annäherung der Person 102 an die Vorrichtung 101 und / oder die Präsenz der Person 102 gegenüber der Vorrichtung zu detektieren. Hierauf kann dann der Prozess zum Erfassen der biometrischen Identifizierungsmerkmale automatisch getriggert werden. Bei dem gezeigten Ausführungsbeispiel ist die erste Bildaufnahmeeinrichtung 1 mit der zweiten Bildaufnahmeeinrichtung 2 verbunden und so mit dieser zusammen höhenverstellbar an dem Träger 109 aufgenommen. Alternativ kann die erste Bildaufnahmeeinrichtung 1 getrennt von der zweiten Bildaufnahmeeinrichtung 2 an der Vorrichtung 101 angeordnet sein, zum Beispiel ortsfest oder verlagerbar an dem Träger 9.

Die Speichereinrichtung 118 der Steuereinrichtung 116 ist eingerichtet, Daten zumindest vorübergehend elektronisch zu speichern. Hiervon umfasst sein können zum Beispiel empfangene Wärmebilddaten der ersten Bildaufnahmeeinrichtung 1, empfangene Bilddaten der zweiten Bildaufnahmeeinrichtung 2, Steuerungsdaten zum Steuern der Vorrichtung 101 und/oder der Bedieneinrichtung 111 und/oder der Fingerabdruckeinrichtung 113 beim Erfassen der biometrischen Identifizierungsmerkmale.

Auch Referenzdaten zur Bestimmung einer Person anhand empfangener Wärmebilddaten können in der Speichereinrichtung 118 hinterlegt sein, sowie Zuordnungsdaten, die für Personen unterschiedlicher Größe eine der jeweiligen Größe angepasste Zuordnung zwischen einer Referenzhöhe der zweiten Bildaufnahmeeinrichtung 2 und einer zugeordneten Referenzposition, insbesondere Referenzhöhe der Bedieneinrichtung 111 anzeigen. Die Höhenangaben können sich zum Beispiel auf die Bezugsebene 105 beziehen.

Die Zuordnungsdaten geben damit insbesondere an, in welchem Abstand die Bedieneinrichtung 111 in Bezug auf die horizontale Sicht- oder Aufnahmeachse 6 (bzw. die entsprechende Höhe der zweiten Bildaufnahmeeinrichtung 2) anzuordnen ist, um der Person 102 eine bequeme und ergonomisch angepasste Position beim Bedienen der Bedieneinrichtung 111 zu ermöglichen, derart, dass hierbei der gegenüber dem Oberarm 115 abgewinkelte Unterarm 114 in im Wesentlichen horizontaler Lage gehalten werden kann, wobei der Unterarm 114 hierbei auf der Auflagefläche 112 der Bedieneinrichtung 111 zur Auflage kommt.

Die Zuordnungsdaten können zwischen stehender und sitzender Position der Person 102 unterscheiden, so dass insbesondere auch für Rollstuhlfahrer eine entsprechende Höheneinstellung für zweite Bildaufnahmeeinrichtung 2 und Bedieneinrichtung 111 automatisiert vorgenommen werden kann.

Die Person 102 in Fig. 1 hat sich in den Aufnahmebereich der Vorrichtung 1 begeben, was mit Hilfe der ersten Bildaufnahmeeinrichtung 1 detektiert wird. Die zweite Bildaufnahmeeinrichtung 2 sowie die Bedieneinrichtung 111 sind zu diesem Zeitpunkt in einer jeweiligen Ausgangs- oder Ruhestellung bezüglich der Höhe über der Bezugsebene 105 angeordnet.

Entweder kontinuierlich oder als Reaktion auf das Erfassen der Annährung oder der Präsenz der Person 102 werden Wärmebilddaten der im Aufnahmebereich 104 der Vorrichtung befindlichen Person 102 empfangen. Mittels der Wärmebilddaten wird zunächst das Vorhandensein der Person 102 im Aufnahmebereich 104 erkannt. Anschließend kann die Position der Person im Aufnahmebereich 104, insbesondere der Kopf- und/oder Gesichtsposition der Person, bestimmt werden. Neben einer Höhenposition des Kopfes der Person 102 kann auch der Abstand der Person von der Vorrichtung bestimmt werden, beispielsweise indem die Größe eines Wärmeclusters in empfangenen Wärmebilddaten bestimmt wird.

Anhand der Kopf- und/oder Gesichtsposition der Person wird eine für die Erfassung biometrischer Merkmale der Person geeignete Aufnahmeposition der zweiten Bildaufnahmeeinrichtung, in welcher das biometrische Bild der Person mittels der zweiten Bildaufnahmeeinrichtung aufnehmbar ist, bestimmt. Die Position entspricht insbesondere einer Position, in der ICAO-Kriterien entsprechende Passbilder durch die zweite Bildaufnahmeeinrichtung aufgenommen werden können. Anschließend wird die zweite Bildaufnahmeeinrichtung 2 mittels der Stelleinrichtung 108 in die Aufnahmeposition in ihrer Höhe verlagert.

Während dieser Höhenverstellung kann die zweite Bildaufnahmeeinrichtung 2 mehrfach digitale Bilder erfassen und es kann ermittelt werden, ob hieraus ein digitales biometrisches Bild erstellbar ist, welches die Bestimmung von biometrischen Gesichtsmerkmalen ermöglicht. Wird festgestellt, dass eine Bildaufnahme diese Voraussetzung nicht erfüllt, kann eine weitere Höhenverstellung erfolgen oder die Bildaufnahme zunächst fortgesetzt werden, um eine zu häufige Nachjustierung der Höheneinstellung zu vermeiden. Wird sodann bestimmt, dass eine weitere Bildaufnahme den Voraussetzungen für ein digitales biometrisches Bild genügt, ist die zweite Bildaufnahmeeinrichtung 2 in Bezug auf die Person 102 in einer Höhe über der Bezugsebene 105 angeordnet, in welcher die optische Achse der zweiten Bildaufnahmeeinrichtung 2 bzw. die Aufnahmeachse 106 für die Erstellung eines biometrischen Gesichtsbildes passend ausgerichtet ist. Der Prozess zum Einstellen der Höhe der zweiten Bildaufnahmeeinrichtung 2 ist damit abgeschlossen.

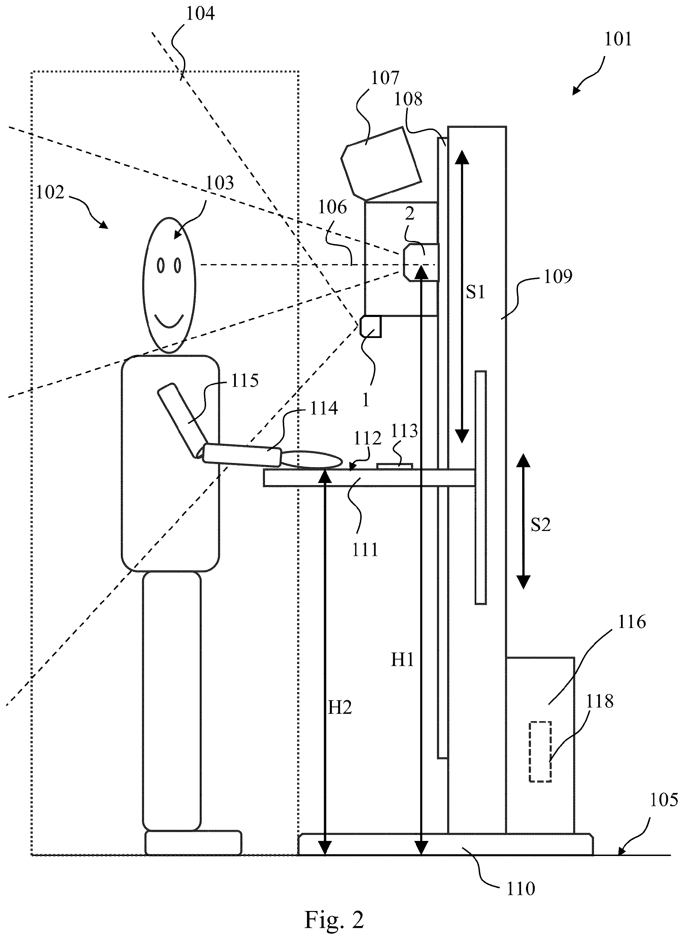

Sodann wird auf die Zuordnungsdaten zugegriffen, die in der Speichereinrichtung 118 gespeichert sind, die mit der die Steuereinrichtung 116 kabelgebunden oder kabellos elektronische Daten austauschen kann. In den Zuordnungsdaten wird für die Höhe, in welcher die zweite Bildaufnahmeeinrichtung 2 bzw. die Aufnahmeachse der zweiten Bildaufnahmeeinrichtung 2 nach der Höheneinstellung angeordnet ist, eine entsprechende Referenzhöhe bestimmt, die gleich der aktuellen Höhe der zweiten Bildaufnahmeeinrichtung 2 ist oder dieser innerhalb vorgebbarer Fehlergrenzen entspricht. Aus den Zuordnungsdaten wird für diese Referenzhöhe dann die zugeordnete Referenzposition (insbesondere Referenzhöhe) für die Bedieneinrichtung 111 bestimmt. Alternativ oder ergänzend können die Zuordnungsdaten die zugeordnete Referenzposition auch für die Fingerabdruckeinrichtung 113 und / oder die Auflagefläche 112 angeben, welche dann für die Position (Höhe) Bedieneinrichtung 111 stehen. Zweck der zugeordneten Referenzposition ist es, die Bedieneinrichtung 111 in Bezug auf die zweite Bildaufnahmeeinrichtung 2 derart hinsichtlich ihrer Höhe einzustellen, dass die Person 102 die in Fig. 2 gezeigte ergonomische und bequeme Position zum Bedienen der Bedieneinrichtung 111 einnehmen kann, also der Unterarm 114 in im Wesentlichen horizontaler Lage gehalten werden kann.

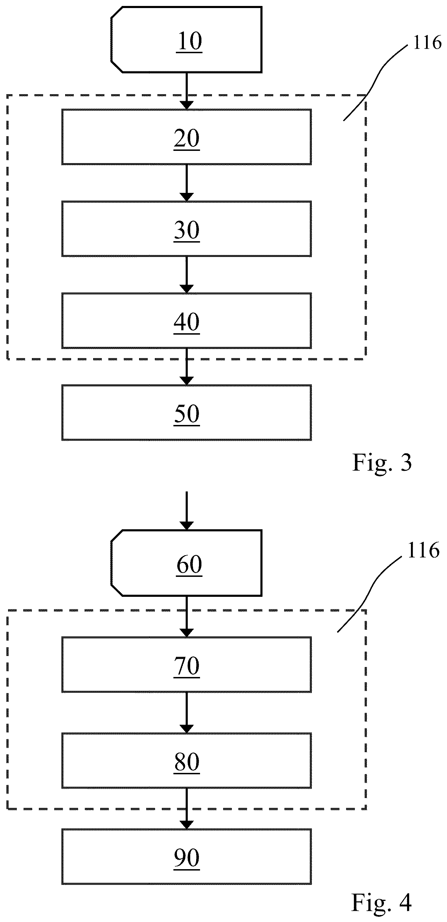

Nach dem Bestimmen der zugeordneten Referenzposition (insbesondere Referenzhöhe) aus den Zuordnungsdaten wird die Bedieneinrichtung 111 von der in Fig. 1 gezeigten in die in Fig. 4 gezeigte Höhenstellung verlagert, was bei dem gezeigten Ausführungsbeispiel mittels der Stelleinrichtung 108 ausgeführt wird. Sodann können für die Person 102 biometrische Identifizierungsmerkmale mittels der zweiten Bildaufnahmeeinrichtung 2 und / oder der Fingerabdruckeinrichtung 113 erfasst werden. Die Vorrichtung 101 wird hierzu hinsichtlich der Positionierung von zweiter Bildaufnahmeeinrichtung 2 und Bedieneinrichtung 111 vorab automatisiert eingestellt.

Die Zuordnungsdaten können auf unterschiedliche Art und Weise bestimmt werden. Beispielsweise kann vorgesehen sein, für Personen unterschiedlicher Größe, sei es in stehender und / oder sitzender Stellung, experimentell Messdaten an einer der Vorrichtung 101 zum Erfassen von biometrischen Identifizierungsmerkmalen entsprechenden Vorrichtung zu detektieren. Hierzu würde dann jeweils die Höhe der zweiten Bildaufnahmeeinrichtung 2 sowie der Fingerabdruckeinrichtung 113 / der Bedieneinrichtung 111 mittels zugeordneter Messeinrichtung erfasst und gespeichert. Derart experimentell erfasste Messwerte für Personen unterschiedlicher Größe können wahlweise gemittelt werden, um schließlich die anzuwendenden Zuordnungsdaten zu bestimmen.

Alternativ oder ergänzend kann vorgesehen sein, die Zuordnungsdaten gemäß Proportionsregeln für den menschlichen Körper zu bestimmen. Hierbei wird angenommen, dass ein Mensch in etwa die Höhe (Größe) von 7 bis 7,5 oder acht Köpfen aufweist. Die Kopfhöhe dient so als eine Art Maßeinheit für die Proportionen des Menschen. Hieraus lässt sich für Personen unterschiedlicher Größe jeweils eine Abschätzung für die Zuordnung zwischen der Höhe der zweiten Bildaufnahmeeinrichtung 2 und der zugeordneten Höhe der Bedieneinrichtung 111 (bei angewinkeltem Unterarm) ableiten.

Fig. 2 zeigt die Vorrichtung nach einer Verlagerung der zweiten Bildaufnahmeeinrichtung 2 und der Bedieneinrichtung 111. Für eine Aufnahmeposition, in der biometrische Merkmale der Person, in diesem Fall mittels eines biometrischen Gesichtsbildes aufgenommen werden kann, ist die zweite Bildaufnahmeeinrichtung 2 in einer Höhe H1 über einer Bezugsebene 5, auf der im gezeigten Beispiel die Person 102 sowie die Vorrichtung 101 stehen, so angeordnet, dass zwischen der zweiten Bildaufnahmeeinrichtung 2, insbesondere einer Aufnahmeoptik die zweite Bildaufnahmeeinrichtung 2, und dem Gesicht 103 der Person 102 eine horizontale Sicht- oder Aufnahmeachse 106 ausgebildet ist, entlang welcher die zweite Bildaufnahmeeinrichtung 2 das digitale biometrische Porträt derart aufnehmen kann, dass aus den digitalen Daten für das Porträt biometrische Gesichtsmerkmale bestimmt werden können.

In Fig. 3 sind Schritte eines erfindungsgemäßen Verfahrens dargestellt, die zum automatisierten Betreiben der in Fig. 1 und Fig. 2 gezeigten Vorrichtung zum Erfassen eines biometrischen Gesichtsbildes einer Person ausgeführt werden.

Zunächst werden Wärmebilddaten einer im Aufnahmebereich der Vorrichtung befindlichen Person mittels der ersten Bildaufnahmeeinrichtung empfangen, 10. Die nachfolgenden Schritte 20 bis 40 werden in der Steuereinrichtung ausgeführt. Für die Ausführung dieser Schritte in der Steuereinrichtung 116 bzw. in der in der Steuereinrichtung enthaltenen Auswerteeinrichtung werden die empfangenen Wärmebilddaten von der ersten Bildaufnahmeeinrichtung an die Steuereinrichtung 116 übertragen. Anschließend erfolgt die Erkennung einer Person im Aufnahmebereich, 20, insbesondere des Kopfes oder des Gesichtes der Person. Nun wird die Position der Person im Aufnahmebereich, insbesondere der Kopf- und/oder Gesichtsposition der Person mittels der empfangenen Wärmebilddaten bestimmt, 30. Anhand der bestimmten Position der Person erfolgt im nächsten Schritt eine Bestimmung einer für die Erfassung biometrischer Merkmale der Person geeigneten Aufnahmeposition der zweiten Bildaufnahmeeinrichtung, in welcher die biometrischen Merkmale der Person mittels der zweiten Bildaufnahmeeinrichtung aufnehmbar sind, oder, gemäß einer alternativen Ausführungsform, die mit Bezug auf Fig. 4 erläutert wird, einer der geeigneten Aufnahmeposition angenäherten Aufnahmeposition, 40.

Anhand der ermittelten geeigneten oder annähernd geeigneten Aufnahmeposition folgt nun ein Verlagern der zweiten Bildaufnahmeeinrichtung mittels der Stelleinrichtung in entsprechende Position. Ein entsprechendes Steuersignal wird dazu von der Steuereinrichtung 116 an die Stelleinrichtung übertragen.

Mit einer verringerten Auflösung der von der zweiten Bildaufnahmeeinrichtung empfangenen und/oder übertragenen Wärmebilddaten kann der durch die Steuereinrichtung zu verarbeitende Bilddatenstrom reduziert und somit die Bestimmung einer Aufnahmeposition beschleunigt werden. Gemäß weiteren Ausführungsformen ist der Wärmebilddatenstrom so weit verringert, dass nicht die geeignete Aufnahmeposition, sondern nur die der geeigneten Aufnahmeposition angenäherte Aufnahmeposition bestimmbar ist. Entsprechend wird die zweite Bildaufnahmeeinrichtung in einen Bereich nahe der geeigneten Aufnahmeposition verlagert, und das Verfahren der Fig. 3 wird mit den zusätzlichen Verfahrensschritten der Fig. 4 ergänzt.

Zunächst erfolgt ein Empfang von Bilddaten, insbesondere hochauflösenden (HD) Bilddaten des Aufnahmebereichs mittels der zweiten Bildaufnahmeeinrichtung, 60. Bevorzugt sind die mittels der zweiten Bildaufnahmeeinrichtung empfangenen Bilddaten deutlich höher auflösend als die von der ersten Bildaufnahmeeinrichtung zuvor empfangenen Wärmebilddaten, insbesondere hochauflösend. Mittels der höher auflösenden Bilddaten wird nun erneut die Position der Person im Aufnahmebereich bestimmt, insbesondere die Kopf- und/oder Gesichtsposition der Person, 70. Es folgt die Bestimmung einer für die Erfassung biometrischer Merkmale der Person geeigneten Aufnahmeposition der zweiten Bildaufnahmeeinrichtung, in welcher das biometrische Bild der Person mittels der zweiten Bildaufnahmeeinrichtung aufnehmbar ist, 80. Schließlich wird die zweite Bildaufnahmeeinrichtung auf Grundlage der ermittelten geeigneten Aufnahmeposition erneut mittels der Stelleinrichtung verlagert, bis die bestimmte Aufnahmeposition erreicht ist, 90.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

### Bezugszeichenliste

- 1: erste Bildaufnahmeeinrichtung
- 2: zweite Bildaufnahmeeinrichtung
- 10: Empfang von Wärmebilddaten des Aufnahmebereichs
- 20: Erkennung einer Person im Aufnahmebereich
- 30: Bestimmung der Position der Person im Aufnahmebereich
- 40: Bestimmung einer einzustellenden Position der zweiten Bildaufnahmeeinrichtung
- 50: Verlagern der zweiten Bildaufnahmeeinrichtung in die bestimmte Position
- 60: Empfang von HD-Bilddaten des Aufnahmebereichs
- 70: Bestimmung der Position der Person im Aufnahmebereich
- 80: Bestimmung einer einzustellenden Position der zweiten Bildaufnahmeeinrichtung
- 90: Verlagern der zweiten Bildaufnahmeeinrichtung in die bestimmte Position
- 101: Vorrichtung
- 102: Person
- 103: Gesicht
- 104: Aufnahmebereich
- 105: Bezugsebene
- 106: Aufnahmeachse
- 107: Beleuchtungseinrichtung
- 108: Stelleinrichtung
- 109: Träger
- 110: Vorrichtungsfuß
- 111: Bedieneinrichtung
- 112: Auflagefläche
- 113: Fingerabdruckeinrichtung
- 114: Unterarm
- 115: Oberarm
- 116: Steuereinrichtung
- 118: Speichereinrichtung
- H1: Höhe der zweiten Bildaufnahmeeinrichtung
- H2: Höhe der Bedieneinrichtung
- S1: Verstellweg der zweiten Bildaufnahmeeinrichtung
- S2: Verstellweg der Bedieneinrichtung
- W1: Bildwinkel der ersten Bildaufnahmeeinrichtung
- W2: Bildwinkel der zweiten Bildaufnahmeeinrichtung

## Patentansprüche

1. Verfahren zum automatisierten Betreiben einer Vorrichtung (101) zum Erfassen von biometrischen Merkmalen einer Person, aufweisend:
- Bereitstellen einer Vorrichtung (101) zum Erfassen von biometrischen Merkmalen einer Person (102), mit einer ersten Bildaufnahmeeinrichtung (1) zum Aufnehmen von Wärmebilddaten einer Person (102) sowie einer zweiten Bildaufnahmeeinrichtung (2) zur Erfassung biometrischer Merkmale der Person, wobei wenigstens die Position der zweiten Bildaufnahmeeinrichtung (2) zum Einstellen einer Aufnahmeposition mittels einer Stelleinrichtung (108) einstellbar ist;
- Empfangen von Wärmebilddaten einer in einem Aufnahmebereich (104) der Vorrichtung (101) befindlichen Person mittels der ersten Bildaufnahmeeinrichtung (1);
- Bestimmung der Position der Person (102) im Aufnahmebereich, insbesondere der Kopf- und/oder Gesichtsposition der Person (102) mittels der empfangenen Wärmebilddaten;
- Bestimmung einer für die Erfassung biometrischer Merkmale der Person (102) geeigneten Aufnahmeposition der zweiten Bildaufnahmeeinrichtung (2) oder einer an die geeignete Aufnahmeposition angenäherten Position der zweiten Bildaufnahmeeinrichtung (2);
- Verlagern der zweiten Bildaufnahmeeinrichtung (2) mittels der Stelleinrichtung (108) in die geeignete Aufnahmeposition und/oder die angenäherte Position.

2. Verfahren nach Anspruch 1, **gekennzeichnet durch** ein Erfassen der biometrischen Merkmale der Person (102) mittels der zweiten Bildaufnahmeeinrichtung (2).

3. Verfahren nach einem der obigen Ansprüche, wobei wenigstens die Höhe der zweiten Bildaufnahmeeinrichtung (2) eingestellt wird.

4. Verfahren nach einem der obigen Ansprüche, wobei die Aufnahmeposition einer Position entspricht, in der eine Aufnahmeachse (106) der zweiten Bildaufnahmeeinrichtung (2) auf Höhe der Augen der Person (102), auf Höhe einer horizontalen Sichtachse der Person (102), und/oder auf Höhe der Frankfurter Horizontalen der Person angeordnet ist.

5. Verfahren nach einem der obigen Ansprüche, **gekennzeichnet durch** die zusätzlichen Schritte
- Empfang von Bilddaten des Aufnahmebereichs mittels der zweiten Bildaufnahmeeinrichtung (2);
- Bestimmung der Position der Person (102) im Aufnahmebereich, insbesondere der Kopf- und/oder Gesichtsposition der Person (102) mittels der empfangenen Bilddaten;
- Bestimmung einer für die Erfassung biometrischer Merkmale der Person (102) geeigneten Aufnahmeposition der zweiten Bildaufnahmeeinrichtung (2), in welcher das biometrische Bild der Person (102) mittels der zweiten Bildaufnahmeeinrichtung (2) aufnehmbar ist;
- Verlagern der zweiten Bildaufnahmeeinrichtung (2) mittels der Stelleinrichtung (108) in die Aufnahmeposition.

6. Verfahren nach einem der obigen Ansprüche, wobei die Bestimmung der Position der Person (102) einen oder mehrere der folgenden Schritte umfasst:
- Erkennung von Wärmeinhomogenitäten,
- Bestimmung von Wärmeinhomogenitäten mit einer Temperatur in einem vorbestimmten Temperaturbereich, vorzugsweise in einem Temperaturbereich von 25 °C bis 37 °C, weiter vorzugsweise von 30 °C bis 36 °C, insbesondere von 32 °C bis 34 °C,
- Bestimmung eines Clusters von Wärmeinhomogenitäten
i. mit einer Erstreckung, die einer Referenzerstreckung entsprechen und/oder innerhalb eines Referenzerstreckungsbereichs liegen kann.
ii. und/oder einer Kontur, die einer Referenzkontur entsprechen und/oder innerhalb eines vorstimmten Referenzkonturbereiches von einer Referenzkontur liegt.
- Bestimmung der Position von Wärmeinhomogenitäten im Aufnahmebereich (104).

7. Verfahren nach einem der obigen Ansprüche wobei mittels der ersten Bildaufnahmeeinrichtung (1) und/oder der zweiten Bildaufnahmeeinrichtung (2) ein Videostream empfangen wird.

8. Vorrichtung (101) zum Erfassen von biometrischen Identifizierungsmerkmalen einer Person, aufweisend:
- eine erste Bildaufnahmeeinrichtung (1) zum Aufnehmen von Wärmebilddaten einer Person (102),
- eine zweite Bildaufnahmeeinrichtung (2) zur Erfassung biometrischer Merkmale der Person (102), insbesondere zum Aufnehmen eines biometrischen Bildes;
- eine Stelleinrichtung (108), wobei die zweite Bildaufnahmeeinrichtung (2) zum Einstellen einer Aufnahmeposition mittels der Stelleinrichtung (108) einstellbar ist, insbesondere hinsichtlich einer jeweiligen Höhe oberhalb einer Bezugsebene (105),
wobei die Vorrichtung (101) für Folgendes eingerichtet ist:
- Empfangen von Wärmebilddaten einer in einem Aufnahmebereich (104) der Vorrichtung (101) befindlichen Person; Bestimmung der Position der Person (102) im Aufnahmebereich, insbesondere der Kopf- und/oder Gesichtsposition der Person (102) mittels der empfangenen Wärmebilddaten;
- Bestimmung einer für die Erfassung biometrischer Merkmale der Person (102) geeigneten Aufnahmeposition der zweiten Bildaufnahmeeinrichtung (2) oder einer an die geeignete Aufnahmeposition angenäherten Position der zweiten Bildaufnahmeeinrichtung (2), in welcher die biometrischen Merkmale der Person (102) mittels der zweiten Bildaufnahmeeinrichtung (2) aufnehmbar sind;
- Verlagern der zweiten Bildaufnahmeeinrichtung (2) mittels der Stelleinrichtung (108) in die geeignete Aufnahmeposition und/oder die angenäherte Position.

9. Vorrichtung (101) nach Anspruch 8, wobei die Vorrichtung (101) zum Erfassen von biometrischen Merkmalen der Person (102) einen Träger (109) aufweist, an welchem die zweite Bildaufnahmeeinrichtung (2) und die Stelleinrichtung (108) angeordnet sind.

10. Vorrichtung (101) nach Anspruch 8 oder 9, wobei die Vorrichtung (101) zum Erfassen von biometrischen Merkmalen der Person (102) als Kiosk-Terminal ausgestaltet ist.

11. Vorrichtung (101) nach einem der Ansprüche 8 bis 10, wobei die Vorrichtung (101) eine Bedieneinrichtung (111), die unabhängig von der zweiten Bildaufnahmeeinrichtung (2) mittels der Stelleinrichtung (108) positionierbar ausgestaltet ist, und welche eingerichtet ist, eine Benutzereingabe der Person (102) zu Erfassen.

12. Vorrichtung (101) nach einem der Ansprüche 8 bis 11, wobei die Bedieneinrichtung (111) eine Fingerabdruckeinrichtung (113) umfasst.
